(19) **Europäisches Patentamt**

**European Patent Office**

**Office européen des brevets**

(11) Veröffentlichungsnummer: **0 350 787 B1**

(12) **EUROPÄISCHE PATENTSCHRIFT**

(45) Veröffentlichungstag der Patentschrift: **10.11.93**

(21) Anmeldenummer: **89112349.9**

(22) Anmeldetag: **06.07.89**

(51) Int. Cl.⁵: **B60K 28/16**, B60T 8/32

(54) Antriebsschlupfregler für Kraftfahrzeuge.

(30) Priorität: **13.07.88 DE 3823686**

(43) Veröffentlichungstag der Anmeldung:
**17.01.90 Patentblatt 90/03**

(45) Bekanntmachung des Hinweises auf die
Patenterteilung:
**10.11.93 Patentblatt 93/45**

(84) Benannte Vertragsstaaten:
**DE FR IT**

(56) Entgegenhaltungen:
**EP-A- 0 263 595**
**EP-A- 0 293 561**
**DE-A- 3 417 423**
**FR-A- 2 514 706**

(73) Patentinhaber: **KNORR-BREMSE AG**
**Postfach 40 10 60**
**D-80710 München(DE)**

(72) Erfinder: **Utzt, Alfred**
**Am Drudenbogen 10**
**D-8080 Fürstenfeldbruck(DE)**

(74) Vertreter: **von Bülow, Tam, Dr.**
**Patentanwalt**
**Mailänder Strasse 13**
**D-81545 München (DE)**

**Beschreibung**

Die Erfindung bezieht sich auf einen Antriebsschlupfregler für Kraftfahrzeuge gemäß dem Oberbegriff des Patentanspruches 1. Ein derartiger Antriebsschlupfregler (ASR) ist aus der DE-A1-31 27 302 bekannt. Dort werden die Raddrehzahlen gemessen und wie folgt ausgewertet:

Aus der Drehzahldifferenz zwischen linkem Vorder- und Hinterrad bzw. rechtem Hinter- und Vorderrad wird ein Wert für den Schlupf des jeweils angetriebenen linken oder rechten Rades ermittelt. Aus dem arithmetischen Mittelwert der Drehzahlen der nicht-angetriebenen Räder wird ein Geschwindigkeits-Referenzwert gebildet und schließlich wird eine Kurvenfahrt dadurch erkannt, daß die Drehzahldifferenz der nicht-angetriebenen Räder einen bestimmten Wert überschreitet. In Abhängigkeit von diesen Größen und fest vorprogrammierten Schwellwerten werden unterschiedliche Ansprechverhalten des Antriebsschlupfreglers ausgelöst. Solange das Fahrzeug relativ langsam fährt, d.h. der Mittelwert der Drehzahlen der beiden nicht-angetriebenen Räder unter einem ersten Schwellwert liegt, wird nur das einzelne Rad gebremst, das durchzurutschen droht. Damit soll die Fahrzeugbeschleunigung optimiert werden. Bei höheren Fahrzeuggeschwindigkeiten wird dagegen auf eine Optimierung der Seitenführungskraft stärkeres Gewicht gelegt, indem nicht das durchzurutschen drohende Rad gebremst sondern insgesamt die Antriebsleistung reduziert wird. In Abhängigkeit davon, ob eine Kurvenfahrt erkannt wird oder nicht, werden die Schwellwerte für die Fahrzeuggeschwindigkeit unterschiedlich eingestellt dergestalt, daß bei Kurvenfahrt schon bei niedrigeren Geschwindigkeiten im Hinblick auf eine Optimierung der Seitenführungskraft geregelt wird, während bei Geradeausfahrt auch noch bei höheren Geschwindigkeiten in Richtung auf eine Optimierung der Fahrzeugbeschleunigung geregelt wird.

Dieses bekannte System soll auch in Kombination mit einer Blockierschutzregelung arbeiten. Ein beim Stand der Technik nicht gelöstes Problem liegt jedoch darin, den Zustand einer Kurvenfahrt sicher zu erfassen. Drehzahldifferenzen der beiden nicht-angetriebenen Räder können nämlich nicht nur bei Kurvenfahrt sondern auch bei drohendem Blockieren eines der nicht-angetriebenen Räder auftreten. Der eingangs beschriebene Antriebsschlupfregler kann zwischen diesen Zuständen nicht unterscheiden, was zu gefährlichen Situationen führen kann, wenn bei drohendem Blockieren eines oder mehrerer Räder der Antriebsschlupfregler noch zusätzlich eines der Räder bremst. Eine weitere Schwierigkeit bereitet die Ermittlung der tatsächlichen Fahrzeuggeschwindigkeit. In erster Näherung wird diese durch die nicht-angetriebenen Fahrzeugräder recht gut wiedergegeben. Dabei muß natürlich sichergestellt sein, daß dieses Rad frei rollt und nicht gerade gebremst wird. Bei einer Geradeausfahrt wird dadurch die Fahrzeuggeschwindigkeit recht gut erfaßt, nicht jedoch bei Kurvenfahrt, da die Radumfangsgeschwindigkeiten zwischen kurveninnerem und kurvenäußerem Rad je nach Kurvenradius durchaus beträchtlich voneinander abweichen können. Wählt man noch - wie bei vielen Fahrzeugen üblich - eine diagonale Aufteilung dergestalt, daß bei angetriebener Hinterachse das linke Vorderrad die Referenzgeschwindigkeit für das rechte Hinterrad und das rechte Vorderrad die Referenzgeschwindigkeit für das linke Hinterrad liefert, so kann dies zu beträchtlichen Fehlern führen, da insbesondere für das kurveninnere Hinterrad (bei nicht-angetriebener Vorderachse) eine zu hohe Fahrzeuggeschwindigkeit (Radgeschwindigkeit des kurvenäußeren Vorderrades) vorgetäuscht wird. Auch wird bei einer Blockierneigung der nicht-angetriebenen Räder eine falsche tatsächliche Fahrzeuggeschwindigkeit vorgetäuscht.

Aufgabe der Erfindung ist es, die Antriebsschlupfregelung der eingangs genannten Art dahingehend zu verbessern, daß sie präziser arbeitet und insbesondere den Zustand einer Kurvenfahrt sicher erkennt. Diese Aufgabe wird bei dem gattungsbildenden Antriebsschlupfregler durch die Merkmale des kennzeichnenden Teiles des Patentanspruches 1 gelöst. Vorteilhafte Ausgestaltungen und Weiterbildungen der Erfindung sind den Unteransprüchen zu entnehmen.

Kurz zusammengefaßt wird bei der Erfindung zunächst geprüft, ob eventuelle Drehzahldifferenzen zwischen linkem und rechtem Referenzrad durch eine Kurvenfahrt hervorgerufen sind oder durch andere Einflüsse, insbesondere durch Einsatz eines Blockierschutzreglers. Stellt die Auswertung fest, daß Drehzahldifferenzen zwischen nicht angetriebenen Rädern einer Achse vorhanden sind aber nicht durch Kurvenfahrt (also z.B. durch ABS-Regelung) aufgetreten sind, so bleibt der Antriebsschlupfregler unwirksam geschaltet. Der Zustand einer Kurvenfahrt wird demnach dadurch von einer Geradeausfahrt oder anderen Einflüssen, wie z.B. dem Einsatz eines Blockierschutzreglers, unterschieden, daß kumulativ folgende Kriterien erfüllt sind:

a) Der Absolutbetrag der Drehzahldifferenz der beiden nicht-angetriebenen Räder liegt unterhalb eines fest vorgegebenen Wertes,

b) der Absolutbetrag der Differenz der Radbeschleunigungen der beiden nicht-angetriebenen Räder liegt unterhalb eines fest vorgegebenen Schwellwertes,

c) der Absolutwert der Radbeschleunigung jedes einzelnen, nicht-angetriebenen Rades liegt unterhalb eines vorbestimmten Grenzwertes und

d) die genannten Bedingungen a), b) und c) sind mindestens für eine fest vorgegebene Zeitdauer vorhanden.

Wird - wie bei der Erfindung - die Referenzgeschwindigkeit von den nicht-angetriebenen Rädern abgeleitet, so kann eine Antriebsschlupfregelung nur dann einsetzen, wenn entweder keine Drehzahldifferenz zwischen diesen Rädern vorhanden ist (Geradeausfahrt) oder wenn eine Kurvenfahrt vorliegt.

Nach einer Ausgestaltung der Erfindung wird der Referenzwert durch einen additiven Korrekturwert modifiziert, wobei der Korrekturwert der Drehzahldifferenz der beiden nicht angetriebenen Räder proportional ist. Damit wird auch der Kurvenradius bei der Bildung des Referenzwertes berücksichtigt. Bei sehr engen Kurven ist die Drehzahldifferenz zwischen linkem und rechtem Rad größer als bei langgestreckten Kurven mit großem Krümmungsradius. Nach der Weiterbildung des Anspruches 3 wird auch noch die Fahrzeuglänge berücksichtigt. Bei Fahrzeugen mit sehr langem Radstand "schneiden" die Hinterräder die Kurven relativ stark, so daß eine auf den Referenzwert bezogene Schlupfregelung fehlerhaft wäre.

Nach der Ausgestaltung des Anspruches 4 wird ein empirisch ermittelter, besonders günstiger Korrekturfaktor vorgeschlagen. Mit Anspruch 5 erreicht man, daß die Referenzgeschwindigkeit unabhängig vom Richtungssinn der Kurve (Links- oder Rechtskurve) ist. Anspruch 6 schließlich gibt einen besonders bevorzugten, empirisch ermittelten Wert für einen beim Anspruch 1 verwendeten Parameter an.

An dieser Stelle sei noch darauf hingewiesen, daß sich der Referenzwert für die Fahrzeuggeschwindigkeit bei Kurvenfahrt durchaus beträchtlich von der tatsächlichen Fahrzeuggeschwindigkeit (bezogen auf die Fahrzeugmitte) unterscheiden kann. Dies ist bewußt so gewählt, da durch Änderungen der Referenzgeschwindigkeit gegenüber der tatsächlichen Fahrzeuggeschwindigkeit im Ergebnis die Wirkung der Verstellung der Schwellwerte erzielt wird. Man erhält damit den großen Vorteil, daß nur eine Größe, nämlich die Referenzgeschwindigkeit verändert werden muß und nicht eine Vielzahl von Schwellwerten, so daß mit der Erfindung auch der Bauaufwand bzw. bei Realisierung mit einem Mikroprozessor der Programmaufwand verringert wird.

Im folgenden wird die Erfindung anhand eines Ausführungsbeispieles im Zusammenhang mit der Zeichnung ausführlicher erläutert. Es zeigt:

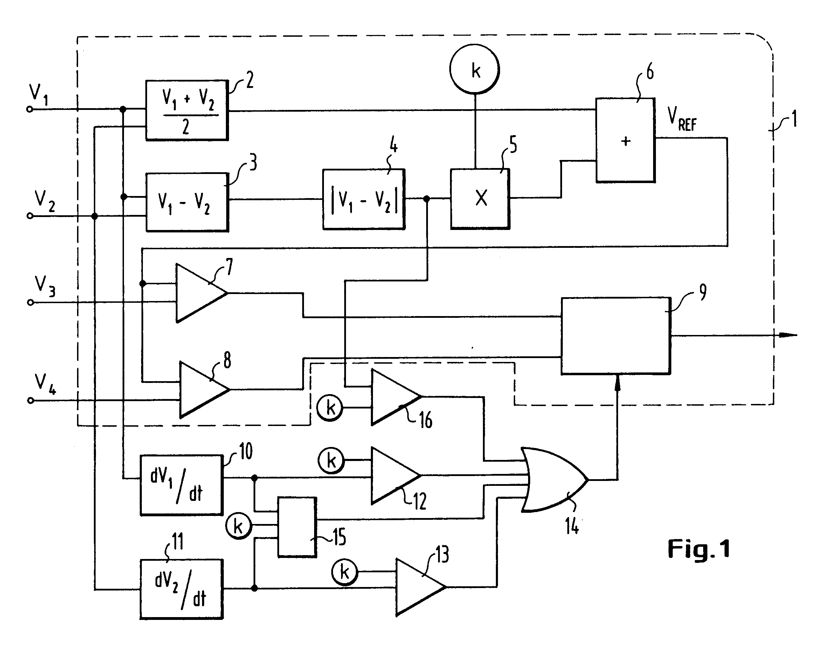

Fig. 1 ein Prinzipschaltbild des Antriebsschlupfreglers nach der Erfindung;

Fig. 2 ein Diagramm der Drehzahlverläufe von rechtem und linkem Vorderrad eines Fahrzeuges mit nicht-angetriebener Vorderachse bei einer ABS-Bremsung und bei Kurvenfahrt.

Im folgenden wird von einem zweiachsigen Kraftfahrzeug mit vier Rädern ausgegangen, bei dem die Hinterachse angetrieben und die Vorderachse nicht angetrieben ist. Wenn also von Voderrädern gesprochen wird, sind damit stets die nicht-angetriebenen Räder gemeint. Bei Fahrzeugen mit Vorderradantrieb sind dann die Ausdrücke analog umzusetzen.

Der Antriebsschlupfregler hat vier Meßeingänge, denen Meßsignale der vier Räder zugeführt werden, die der Radumfangsgeschwindigkeit des jeweiligen Rades entsprechen. Das Signal $v_1$ bezieht sich auf die Radumfangsgeschwindigkeit des linken Vorderrades, $v_2$ auf die des rechten Vorderrades, $v_3$ auf die des linken Hinterrades und $v_4$ auf die des rechten Hinterrades. In einem ersten Rechenbaustein 2 wird der arithmetische Mittelwert $(v_1 + v_2)/2$ gebildet. In einem zweiten Rechenbaustein 3 wird die Differenz $v_1 - v_2$ gebildet. In einem dritten Rechenbaustein 4 wird der Absolutwert des Ausgangssignales des Rechenbausteines 3 gebildet. In einem vierten Rechenbaustein 5 wird das Ausgangssignal des Rechenbausteines 4 mit einem konstanten Faktor k multipliziert. In einem fünften Rechenbaustein 6 werden die Ausgangssignale der Rechenbausteine 2 und 5 addiert. Das Ausgangssignal des Rechenbausteines 6 stellt die Referenzgeschwindigkeit $v_{Ref}$ dar, die demnach folgender Bedingung genügt:

$$v_{Ref} = \frac{v_1 + v_2}{2} + k \, / \, v_1 - v_2 \, /$$

In zwei Vergleichern 7 bzw. 8 werden die Signale $v_3$ bzw. $v_4$ mit dem Referenzwert $v_{Ref}$ verglichen, womit man Signale $s_3$ bzw. $s_4$ erhält, die dem Schlupf des linken bzw. rechten Hinterrades (bezogen auf $v_{Ref}$) proportional sind. Diese Signale werden einem Regler 9 zugeführt, der in Abhängigkeit von dem Wert des Schlupfes die Antriebsleistung und/oder die Bremse dahingehend regelt, daß ein maximal zulässiger Schlupf von beispielsweise 3 bis 4 % nicht überschritten wird. Die Schwellwerte für diesen Schlupf sind fest vorgegeben und brauchen auch nicht verändert werden, da sich ja der Referenzwert $v_{Ref}$ in Abhängigkeit

EP 0 350 787 B1

von dem Kurvenradius ändert.

Wie eingangs erwähnt, ist der Korrekturfaktor k, der einem Eingang des Multiplizierers 5 zugeführt wird, ebenfalls konstant und primär vom Radstand, also dem Abstand zwischen Vorder- und Hinterrädern abhängig.

Dieser Faktor ist negativ, so daß der Referenzwert $v_{Ref}$ bei Kurvenfahrt immer kleiner als der arithmetische Mittelwert der Geschwindigkeiten der beiden Vorderräder ist. Damit wird erreicht, daß bei Kurvenfahrt der zulässige Schlupf der Hinterräder kleiner wird, so daß bei Kurvenfahrt mehr Reserven des Haftwertes für die Seitenstabilität vorhanden sind.

Wie eingangs erwähnt, darf die Antriebsschlupfregelung nicht wirksam sein, wenn eine Blockierschutzregelung wirksam ist. Da bei einer Blockierschutzregelung ebenfalls Differenzgeschwindigkeiten zwischen linkem und rechtem Vorderrad auftreten können, muß Sorge dafür getragen werden, daß die drei möglichen Betriebszustände "Geradeausfahrt", "Kurvenfahrt" und "Blockierschutzregelung" unterschieden werden können. Eine Geradeausfahrt erkennt man daran, daß die Differenzgeschwindigkeit zwischen den beiden Vorderrädern gleich Null ist. Dieser Fall ist also unproblematisch. Dagegen können sowohl bei Blockierschutzregelung als auch bei Kurvenfahrt solche Differenzgeschwindigkeiten auftreten. Aufgrund der nachfolgenden Kriterien können diese beiden Betriebszustände jedoch unterschieden werden, wobei eine Kurvenfahrt dann vorliegt, wenn folgende Kriterien kummulativ erfüllt sind:

1. Die Drehzahlen der beiden Vorderräder dürfen sich betragsmäßig nicht beliebig stark unterscheiden. Als Grenze wird ein Wert festgelegt, der knapp oberhalb der tatsächlich bei Kurvenfahrt auftretenden Differenzgeschwindigkeiten liegt, wobei der maximal mögliche Lenkeinschlagwinkel zu berücksichtigen ist. In der Praxis wird man den Grenzwert bei ca. 2 m/s festlegen.

2. Die Radbeschleunigungen der beiden Vorderräder dürfen sich ebenfalls nur um einen geringen Betrag voneinander unterscheiden. Der Grenzbetrag ist primär von eventuellen Störsignalen abhängig, die infolge der numerischen Differentiation der Sensorsignale entstehen können. Ansonsten sind die bei einer Kurvenfahrt zu Beginn und am Ende der Kurve auftretenden Beschleunigungen der Radumfangsgeschwindigkeit äußerst gering.

3. Beide Radbeschleunigungen der beiden Vorderräder dürfen auch jeweils für sich bestimmte Grenzwerte nicht überschreiten. Der Maximal- und Minimalwert wird von der maximal erreichbaren Fahrzeugbeschleunigung bzw. von der maximal erreichbaren Verzögerung beim Bremsvorgang bestimmt, wobei auch hier der Einfluß eventueller Störungen zu berücksichtigen ist.

Die Erfüllung der obigen Bedingungen alleine genügt jedoch noch nicht für ein sicheres Erkennen von Kurvenfahrt bedingten Drehzahldifferenzen, da auch während einer ABS-Bremsung kurzzeitig alle Bedingungen erfüllt sein können. Für eine sichere Erkennung muß deshalb die Einhaltung aller drei Bedingungen über eine bestimmte Zeitdauer erfüllt sein. Praktische Versuche zeigen, daß eine Grenze von wenig mehr als 1 sec ausreichend ist. Als günstig hat sich ein Wert von 1,2 sec herausgestellt.

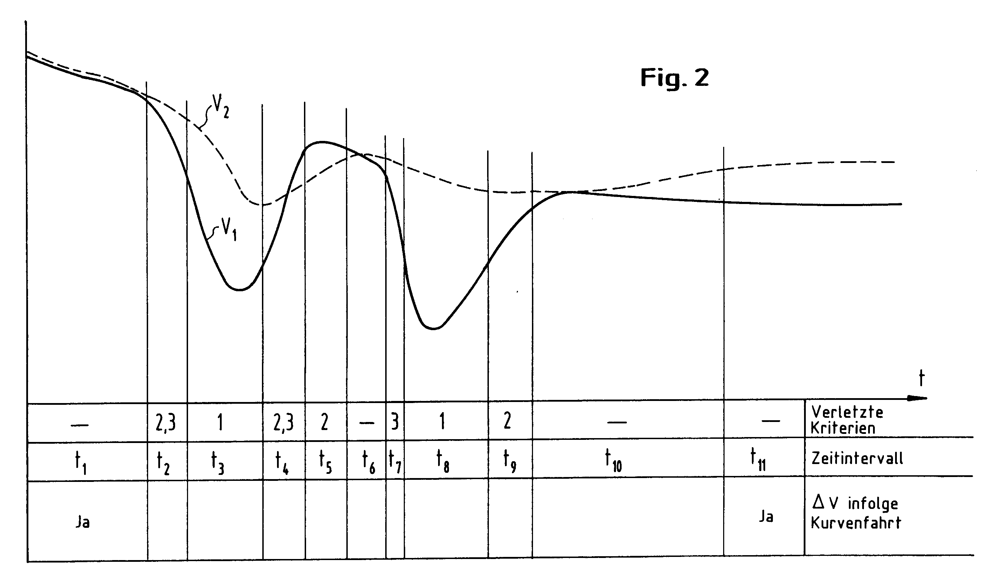

Zur Erläuterung dieser Kriterien wird auf Fig. 2 verwiesen. Die gestrichelte Linie $v_2$ zeigt die Geschwindigkeit des rechten Vorderrades, während die durchgezogene Linie $v_1$ die des linken Vorderrades zeigt. Im Zeitintervall von $t_1$ bis $t_{10}$ liegt eine blockiergeschützte Bremsung vor. In den Zeitintervallen $t_2$, $t_3$, $t_4$, $t_5$, $t_7$, $t_8$ und $t_9$ ist jeweils mindestens eines der oben genannten drei Kriterien verletzt, so daß mit Sicherheit eine ABS-Bremsung erkannt ist. So liegen beispielsweise im Zeitintervall $t_2$ die Radbeschleunigungen beider Räder (Neigung der Kurven) unterhalb eines Grenzwertes (Kriterium 3) und zusätzlich ist die Differenz der Radbeschleunigungen der beiden Vorderräder größer als ein vorgegebener Wert (Kriterium 2).

Im Zeitintervall $t_3$ ist dagegen die Drehzahldifferenz der beiden Vorderräder größer als ein vorgegebener Wert (Kriterium 1). In Fig. 2 ist jeweils angegeben, welches der Kriterien verletzt ist.

In den Zeitintervallen $t_6$ und $t_{10}$ ist dagegen keines der drei Kriterien verletzt, obwohl eine ABS-Bremsung und keine Kurvenfahrt vorliegt. Hier greift jedoch das vierte Kriterium, wonach eine Kurvenfahrt nur dann mit Sicherheit vorliegt, wenn keines der ersten drei Kriterien für einen Zeitraum von länger als ca. 1,2 sec verletzt ist. Somit ist auch in den Zeitintervallen $t_6$ und $t_{10}$ der Antriebsschlupfregler gesperrt. In den Zeitintervallen $t_1$ und $t_{11}$ sind dagegen alle vier Kriterien erfüllt, so daß in diesen Zeitintervallen eine Antriebsschlupfregelung zulässig ist.

Hardwaremäßig wird die Erkennungsschaltung für ABS-Bremsung durch folgende Bausteine erkannt:
In zwei Differenzierern 10 und 11 werden die Radbeschleunigungen der beiden Vorderräder ermittelt. Deren Ausgangssignale werden in Komparatoren 12 bzw. 13 mit zwei vorgegebenen Schwellwerten verglichen, wobei dieser Vergleich einmal für einen Maximalwert und einmal für einen Minimalwert durchgeführt wird. Überschreiten die Ausgangssignale der Differenzierer 10 oder 11 den Schwellwert, so geben die Komparatoren 12 bzw. 13 ein Ausgangssignal ab, womit erkannt wird, daß das Kriterium 3 verletzt ist.

In einem Subtrahierer 15 werden die Ausgangssignale der beiden Differenzierer 10 und 11 voneinander subtrahiert und gleichzeitig der Absolutwert der Differenz gebildet. Dieser Absolutwert wird dann mit einem

4

Schwellwert verglichen. Ist der Absolutwert der Differenz größer als ein vorgegebener Schwellwert, so ist das Kriterium Nr. 2 verletzt.

Schließlich wird das Ausgangssignal des Rechenbausteines 4 in einem Komparator 16 mit einem fest vorgegebenen Schwellwert verglichen. Ist das Ausgangssignal des Rechenbausteines 3 größer als dieser Schwellwert, so spricht der Komparator 16 an, was bedeutet, daß das Kriterium 1 verletzt ist. Die Ausgangssignale der Bausteine 12, 13, 15 und 16 können über ein ODER-Gatter 14 zusammengefaßt und einem Steuereingang des Reglers zugeführt werden, wobei der Regler für die Antriebsschlupfregelung dann gesperrt ist, wenn der Ausgang des ODER-Gatters 14 ein Signal führt.

Abschließend wird noch darauf hingewiesen, daß der Multiplikationswert k (Multiplizierer 5) nicht nur vom Radstand sondern auch vom Lenkverhalten der Hinterräder abhängt. Viele Hinterachskonstruktionen erlauben heute einen gewissen Lenkeinschlag der Hinterräder bei Kurvenfahrt. Es ist daher zweckmäßig, den Wert k empirisch zu bestimmen. Versuche haben ergeben, daß bei Fahrzeugen durchschnittlicher Länge und normalem Lenkverhalten der Hinterräder zweckmäßig bei ca. 0,7 liegt. Wird dieser Wert auf 0,5 festgelegt, so würde dies gerade dem Fall entsprechen, daß als Referenzgeschwindigkeit für ein Hinterrad das seitengleiche Vorderrad gewählt wird. In bestimmten Fällen kann der Wert von k jedoch auch größer 1 werden.

**Patentansprüche**

1. Antriebsschlupfregler für Kraftfahrzeuge, bei dem das Drehzahlverhalten der Räder des Kraftfahrzeuges ausgewertet wird und bei Erkennen eines übermäßigen Antriebsschlupfes die Antriebsleistung der angetriebenen Räder verringert und/oder die angetriebenen Räder gebremst werden, wobei aus dem arithmetischen Mittelwert der Radumfangsgeschwindigkeiten der nichtangetriebenen Räder ein Referenzwert ($V_{Ref}$) gebildet wird, die Drehzahlen der angetriebenen Räder mit diesem Referenzwert ($V_{Ref}$) verglichen werden und den Antriebsschlupf mindernde Gegenmaßnahmen ergriffen werden, wenn der Vergleichswert einen vorgegebenen Schwellwert überschreitet, wobei zusätzlich durch Ermitteln der Drehzahldifferenz zwischen den nichtangetriebenen Rädern des Kraftfahrzeuges festgestellt wird, ob das Fahrzeug geradeaus oder um eine Kurve fährt,
dadurch gekennzeichnet,
daß bei vorhandener Drehzahldifferenz zwischen rechtem und linkem nicht-angetriebenen Rad des Kraftfahrzeuges der Antriebsschlupfregler nur dann wirksam geschaltet ist, wenn folgende Bedingungen kumulativ erfüllt sind:
   a) der Absolutbetrag der Drehzahldifferenz der beiden nicht-angetriebenen Räder liegt unterhalb eines fest vorgegebenen Wertes,
   b) der Absolutbetrag der Differenz der Radbeschleunigungen der beiden nicht-angetriebenen Räder liegt unterhalb eines fest vorgegebenen Schwellwertes,
   c) der Absolutwert der Radbeschleunigungen jedes einzelnen, nicht-angetriebenen Rades liegt unterhalb eines vorbestimmten Grenzwertes und
   d) die genannten Bedingungen a), b) und c) sind mindestens eine fest vorgegebene Zeitdauer vorhanden.

2. Antriebsschlupfregler nach Anspruch 1, dadurch gekennzeichnet, daß die vorgegebene Zeitdauer in der Größenordnung zwischen 1 und 2 sec, vorzugsweise 1,2 sec liegt.

3. Antriebsschlupfregler nach Anspruch 1, dadurch gekennzeichnet, daß der Referenzwert ($V_{Ref}$) durch einen additiven Korrekturwert modifiziert wird, wobei der Korrekturwert der Drehzahldifferenz ($v_1$-$v_2$) der beiden nicht-angetriebenen Räder proportional ist.

4. Antriebsschlupfregler nach Anspruch 3, dadurch gekennzeichnet, daß der Korrekturwert durch einen zusätzlichen Korrekturfaktor (k) modifiziert ist, der den Einfluß des Radstandes berücksichtigt.

5. Antriebsschlupfregler nach Anspruch 4, dadurch gekennzeichnet, daß der zusätzliche Korrekturfaktor negativ ist und im Bereich zwischen 0,5 und vorzugsweise im Bereich zwischen 0,7 und 0,8 liegt.

6. Antriebsschlupfregler nach einem der Ansprüche 3 bis 5, dadurch gekennzeichnet, daß der additive Korrekturwert der Absolutbetrag der Differenz der beiden Radumfangsgeschwindigkeiten (/$v_1$-$v_2$/) der beiden nicht-angetriebenen Räder ist.

**Claims**

1. Traction control system for motor vehicles, in which the speed characteristic of the motor vehicle wheels is evaluated and, when excessive driving slip is detected, the driving power of the driven wheels is reduced and/or the driven wheels are braked, a reference value ($V_{Ref}$) being obtained from the arithmetic mean of the circumferential wheel speeds of the non-driven wheels, the speeds of the driven wheels being compared with this reference value ($V_{Ref}$) and countermeasures to diminish the driving slip being taken when the compared value exceeds a specified threshold, the speed difference between the non-driven wheels of the vehicle being calculated in order to signal whether the vehicle is running straight ahead or passing through a curve, wherein upon the presence of a speed difference between the left and right non-driven wheels of the motor vehicle, the traction control system is enabled only when the following conditions are cumulatively satisfied:

a) the absolute sum of the speed difference between the two non-driven wheels is below a fixed value,

b) the absolute sum of the difference between the wheel acceleration rates of the two non-driven wheels is below a fixed threshold value,

c) the absolute value of the wheel acceleration rate of each individual non-driven wheel is below a predefined limit and

d) the said conditions a), b) and c) apply for at least a fixed time.

2. Traction control system as defined in Claim 1, wherein the specified time is of the order of 1 to 2 sec, preferably 1.2 sec.

3. Traction control system as defined in Claim 1, wherein the reference value ($V_{Ref}$) is modified by an additive correction value which is proportional to the speed difference ($v_1$-$v_2$) between the two non-driven wheels.

4. Traction control system as defined in Claim 3, wherein the correction value is modified by an additional correction factor (k) which accounts for the influence of the wheelbase.

5. Traction control system as defined in Claim 4, wherein the additional correction factor is negative and lies in the range between 0.5 and preferably in the range between 0.7 and 0.8.

6. Traction control system as defined in one of Claims 3 to 5, wherein the additive correction value is the absolute sum of the difference between the two circumferential wheel speeds ($/v_1$-$v_2/$) of the two non-driven wheels.

**Revendications**

1. Régulateur du glissement en entraînement pour des véhicules automobiles, dans lequel l'allure de la vitesse de rotation des roues du véhicule automobile est évaluée et, lors de l'identification d'un glissement en entraînement excessif, la puissance d'entraînement des roues motrices est réduite et/ou les roues motrices sont freinées, et selon lequel une valeur de référence ($V_{Ref}$) est formée à partir de la moyenne arithmétique des vitesses circonférentielles des roues non motrices, les vitesses de rotation des roues motrices sont comparées à cette valeur de référence ($V_{Ref}$) et des contre-mesures, qui réduisent le glissement en entraînement, sont prises lorsque la valeur de référence dépasse une valeur de seuil prédéterminée, et en outre le fait que le véhicule se déplace en ligne droite ou dans une courbe est établi au moyen de la détermination de la différence entre les vitesses de rotation des roues non motrices du véhicule automobile,

caractérisé par le fait

que, lorsqu'il existe une différence entre les vitesses de rotation de la roue non motrice de droite et de la roue non motrice de gauche du véhicule automobile, le régulateur du glissement en entraînement n'est activé que lorsque les conditions suivantes sont satisfaites de façon cumulative :

a) la valeur absolue de la différence entre les vitesses de rotation des deux roues non motrices est inférieure à une valeur prédéterminée de façon fixe,

b) la valeur absolue de la différence entre les accélérations des deux roues non motrices est inférieure à une valeur de seuil prédéterminée de façon fixe,

c) la valeur absolue des accélérations de chaque roue individuelle non motrice est inférieure à une valeur limite prédéterminée, et

d) lesdites conditions a), b) et c) existent au moins pendant un intervalle de temps prédéterminé de façon fixe.

2. Régulateur du glissement en entraînement suivant la revendication 1, caractérisé par le fait que l'intervalle de temps prédéterminé est d'un ordre de grandeur compris entre 1 et 2 s et, de préférence, est égal à 1,2 s.

3. Régulateur du glissement en entraînement suivant la revendication 1, caractérisé par le fait que la valeur de référence ($V_{Ref}$) est modifiée par une valeur de correction active, la valeur de correction étant proportionnelle à la différence ($v_1 - v_2$) entre les vitesses de rotation des deux roues non motrices.

4. Régulateur du glissement en entraînement suivant la revendication 3, caractérisé par le fait que la valeur de correction est modifiée par un facteur de correction supplémentaire (k), qui prend en compte l'influence de l'empattement.

5. Régulateur du glissement en entraînement suivant la revendication 4, caractérisé par le fait que le facteur de correction supplémentaire indicatif se situe dans la plage comprise entre 0,5 et 0,8 et, de préférence, dans la plage comprise entre 0,7 et 0,8.

6. Régulateur du glissement en entraînement suivant l'une des revendications 3 à 5, caractérisé par le fait que la valeur de correction additive est la valeur absolue de la différence ($|v_1 - v_2|$) entre les vitesses circonférentielles des deux roues non motrices.

Fig.1

EP 0 350 787 B1

**Fig. 2**

$V_2$

$V_1$

$t$

| — | 2,3 | 1 | 2,3 | 2 | — | 3 | 1 | 2 | — | — | Verletzte Kriterien |
|---|---|---|---|---|---|---|---|---|---|---|---|
| $t_1$ | $t_2$ | $t_3$ | $t_4$ | $t_5$ | $t_6$ | $t_7$ | $t_8$ | $t_9$ | $t_{10}$ | $t_{11}$ | Zeitintervall |
| Ja | | | | | | | | | | Ja | $\Delta V$ infolge Kurvenfahrt |